(19) Europäisches Patentamt / European Patent Office / Office européen des brevets

(11) **EP 2 212 356 B1**

(12) **FASCICULE DE BREVET EUROPEEN**

(45) Date de publication et mention de la délivrance du brevet:
**18.01.2012 Bulletin 2012/03**

(21) Numéro de dépôt: **08856032.1**

(22) Date de dépôt: **18.11.2008**

(51) Int Cl.:
*C08B 31/04* [(2006.01)]      *C08L 3/04* [(2006.01)]
*D21H 17/28* [(2006.01)]

(86) Numéro de dépôt international:
**PCT/FR2008/052078**

(87) Numéro de publication internationale:
**WO 2009/071796 (11.06.2009 Gazette 2009/24)**

(54) **COMPOSITION AQUEUSE CONTENANT AU MOINS UN AMIDON ANIONIQUE GELATINISE SOLUBLE**

WASSERHALTIGE ZUSAMMENSETZUNG MIT MINDESTENS EINER LÖSLICHEN UND ANIONISCHEN GELATINIERTEN STÄRKE

AQUEOUS COMPOSITION CONTAINING AT LEAST ONE SOLUBLE GELATINIZED ANIONIC STARCH

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.11.2007 FR 0759186**

(43) Date de publication de la demande:
**04.08.2010 Bulletin 2010/31**

(73) Titulaire: **Roquette Freres**
**62136 Lestrem (FR)**

(72) Inventeurs:
• **GOMBERT, Hervé**
**F-62920 Gonnehem (FR)**
• **KLAEYLE, Jérôme**
**F-62400 Bethune (FR)**
• **QUETTIER, Claude**
**F-59130 Lambersart (FR)**

(74) Mandataire: **Cabinet Plasseraud**
**52, rue de la Victoire**
**75440 Paris Cedex 09 (FR)**

(56) Documents cités:
**WO-A-01/94699     GB-A- 1 488 921**

• **WONGSAGONSUP RUNGTIWA ET AL: "Zeta potential (zeta) and pasting properties of phosphorylated or crosslinked rice starches" STARCH, vol. 57, no. 1, janvier 2005 (2005-01), pages 32-37, XP002486087 ISSN: 0038-9056**

**Description**

L'invention concerne une composition aqueuse comprenant au moins un amidon anionique gélatinisé soluble et, de préférence, au moins un amidon insoluble anionique ou non ionique.

Elle concerne notamment une composition aqueuse comprenant une association d'au moins un amidon anionique gélatinisé soluble et d'au moins un amidon anionique insoluble, non gélatinisé ou partiellement gonflé, pour la fabrication de papier ou de carton plat.

Elle concerne en particulier l'utilisation d'une composition selon l'invention en tant qu'adjuvant dit « de masse » pour la fabrication de papier ou de carton plat. Cette utilisation prévoit l'addition d'une composition selon l'invention à la suspension fibreuse, en vue d'une meilleure rétention des fibres et des charges, d'un meilleur égouttage et/ou de meilleures caractéristiques physiques des papiers et cartons obtenus.

Elle concerne aussi l'utilisation d'une composition selon l'invention dans la partie humide de la machine à papier.

Elle vise encore, la préparation d'une composition selon l'invention présentant une excellente stabilité, notamment en termes de viscosité, pour des durées de conservation longues c'est-à-dire de plusieurs mois.

On entend par « amidon anionique », un amidon modifié chimiquement présentant un caractère anionique, exprimé en μeq/gramme de produit sec, mesuré sur un appareil « Streaming Current Detector », commercialisé par la société MÜTEK (mesure dite « SCD »). Les charges anioniques peuvent être introduites par oxydation (notamment à partir d'un oxyde d'amine tel que, par exemple, le « TEMPO » et/ou l'un de ses dérivés), par estérification et/ou par éthérification. L'amidon anionique est alors avantageusement caractérisé par le degré de substitution (DS) qui est égal au nombre moyen de substituants par unité de glucose.

L'amidon anionique au sens de l'invention est choisi parmi les amidons oxydés, les phosphates d'amidons, les sulfates d'amidon, les amidons sulfocarboxylés, les amidons carboxyalkylés, les amidons modifiés par n-alcénylsuccinylation, notamment les amidons n-octénylsuccinylés et n-dodécénylsuccinylés ou les amidons estérifiés par un anhydride d'acide dicarboxylique.

On entend par « amidon insoluble » tout amidon ayant forme de granules qui présentent, en lumière polarisée, une croix noire dite « croix de Malte ». Ce phénomène de biréfringence positive traduit l'organisation semi-cristalline des granules, préservée tant que lesdits granules d'amidon sont insuffisamment hydratés pour être solubilisés. Les granules même gonflés sont considérés comme insolubles tant que la biréfringence persiste.

Par opposition, on entend par « amidon gélatinisé soluble » et, plus particulièrement, par « amidon anionique gélatinisé soluble », tout amidon anionique ne présentant plus l'état granulaire, l'état de transformation de l'amidon étant tel que ladite croix de Malte n'apparaît plus en lumière polarisée.

On entend par composition « stable » une composition pour laquelle la variation de la viscosité n'excède pas 50% de la valeur initiale sur 3 mois ou, mieux, sur 6 mois. De préférence cette variation est inférieure à 25% de la valeur initiale et en particulier inférieure à 10%. Ces valeurs s'appliquent à un stockage à chaud, c'est-à-dire à 35°C, et à un stockage à froid, par exemple à 5°C.

Les compositions de la présente invention présentent également une bonne stabilité chimique.

Les compositions selon l'invention sont particulièrement efficaces pour la préparation de compositions de collage, en particulier d'émulsions pour le collage du papier en milieu neutre, ou de compositions contenant au moins un agent d'ennoblissement du papier, notamment choisi parmi les azurants optiques, les colorants et les polymères synthétiques.

La suspension fibreuse à laquelle est ajoutée la composition de la présente invention au cours de la fabrication de papier, peut être une composition issue de pâtes nobles comme celles destinées à la fabrication de papiers minces, tels que les papiers pelure, les papiers cristal, les fiduciaires, les papiers à cigarettes, les papiers bible, les papiers de soie ou assimilés, ou d'autres « fine paper », notamment destinés à la copie ou à l'impression écriture, jusqu'aux produits couramment dénommés « tissue » ou les papiers électriques, notamment les papiers dits « pour condensateur ».

Sont également concernés les papiers filtres, notamment industriels ou destinés à l'industrie automobile, ou certains papiers spéciaux, notamment ceux contenant des quantités importantes d'oxyde de titane. Parmi ces papiers spéciaux, on peut citer, par exemple, les papiers abrasifs, les supports laminés, les papiers dits « décor », notamment les papiers structurés, les papiers stratifiés et les papiers peints.

Le terme « papier » est considéré ici dans un sens générique et englobe l'ensemble des qualités citées ci-dessus.

Sont particulièrement concernées les pâtes recyclées, notamment dites de vieux papiers, pour lesquels les problèmes techniques sont particulièrement importants. En effet, la part des fibres recyclées et issues de vieux papiers augmente régulièrement dans les compositions fibreuses.

Est concerné tout circuit papetier fermé, c'est-à-dire mettant en oeuvre des quantités d'eau fraîche limitées et faisant appel à des eaux recyclées et diversement chargées.

Le recyclage et la dégradation de la fibre qui en résulte ont pour conséquence majeure de rendre les pâtes à papier de moins en moins réceptives aux adjuvants cationiques, qu'ils soient d'origine synthétique ou naturelle, largement répandus à des fins de floculation et d'amélioration des bilans de la machine, par exemple, en termes d'égouttage, de rétention des fibres et/ou des charges, de vitesse de la machine etc. L'évolution des circuits, liée notamment aux aspects environnementaux font que l'homme de l'art est en permanence à la recherche d'améliorations les concernant.

Les améliorations recherchées peuvent aussi toucher plus directement les propriétés physiques du papier ou du carton plat, mécaniques, optiques ou encore, relatives au toucher, au « peluchage », au « poussiérage », au poudrage et/ou à l'imprimabilité.

Il existe ainsi un besoin d'amélioration de la réceptivité des pâtes à papier aux agents cationiques utilisés couramment.

Un besoin similaire existe dans la fabrication des papiers minces, pour lesquels il devient impératif d'améliorer l'ensemble des conditions de fabrication.

Une solution connue pour renforcer ladite réceptivité aux agents cationiques, consiste à traiter la pâte par un adjuvant à caractère anionique, notamment par un amidon anionique.

Pour la préparation d'amidons anioniques, on introduit des substituants anioniques dans la molécule d'amidon via des réactifs fonctionnels choisis de préférence parmi les suivants :

- Dans le cas des phosphonates d'amidon, l'acide chloroaminoéthane diéthylphosphonique,
- Dans le cas des sulfates d'amidons, l'acide sulfamique, les sulfamates ou encore les complexes $SO_3^-$ donneurs d'électrons tels que le $SO_3^-$TMA (triméthylamine) ou le $SO_3^-$ pyridine,
- Dans le cas des amidons sulfoalkylés, les 2-chloréthane-sulfonates et le 3-chloro-2-hydroxypropane-sulfonate,
- Dans le cas des amidons carboxyalkylés, les sels d'acides halogéno-1-carboxyliques tels que le monochloracétate de sodium ou le chloropropionate de sodium, les lactones comme la propionolactone ou la butyrolactone, l'acrylonitrile (réaction suivie d'une saponification),
- Dans le cas des esters anioniques d'amidons : les anhydrides d'acides tels que les anhydrides maléique, succinique et phtalique,
- Dans le cas des amidons sulfocarboxylés, l'acide chloro-3-sulfo-2-propionique.

La fixation sur l'amidon d'un réactif portant un groupement anionique est bien connue en elle-même. On se rapportera notamment aux ouvrages de référence que sont :

- « Starch : Chemistry and Technology », Whistler et al., vol.II (Industrial Aspects), 1967, Academic Press,
- "Starch Production Technology", J.A. Radley, 1976, Applied Science Publishers Ltd. London,
- « Starch : Chemistry and Technology », Whistler et al., 2éme édition (1984), Academic Press.

La réaction peut être pratiquée en phase humide, sur une suspension d'amidon, en milieu aqueux. Le brevet US 4 387 221 divulgue des exemples de modifications. La réaction peut aussi être réalisée en milieu solvant, mais également en phase sèche, en présence d'un catalyseur de nature alcaline.

Pour suivre la réaction, on mesure sur le produit résultant le degré de substitution (DS).

La modification en phase solvant ou la phase sèche est appropriée dans le cas où la solubilité dans l'eau devient importante, c'est-à-dire quand le DS croît suffisamment.

La fixation peut également être effectuée lors de la solubilisation de l'amidon dans les conditions sus-décrites.

Une difficulté majeure de l'utilisation des amidons anioniques connus est liée à la structure granulaire des amidons anioniques du marché, de leur DS faible et de leur insolubilité initiale. De tels agents, sous forme de poudre ne contenant que leur eau de constitution, nécessitent une opération de cuisson, en cuve ou sous pression de vapeur vive, opérée sur le lieu de l'utilisation. Cette opération apparaît d'autant plus lourde qu'elle vient s'ajouter, dans la plupart des cas, à la préparation d'adjuvants cationiques qui nécessite la mise en place d'équipements spécifiques.

Les demandes EP 1 167 434 et WO 01/94699 illustrent les inconvénients de tels procédé lourds.

Une autre difficulté majeure réside dans la préparation de compositions amylacées aqueuses anioniques sous forme de solutions colloïdales à la fois suffisamment concentrées et stables dans le temps, notamment en termes de viscosité. Que ladite solution colloïdale soit obtenue par cuisson et/ou par l'obtention d'un DS suffisant, il est très difficile, voire impossible de préparer des solutions d'amidon(s) anionique(s) stables ayant une teneur en matières sèches supérieure à 10%. Leur durée de vie au stockage est généralement insuffisante en vue d'une utilisation industrielle. On estime généralement qu'une solution d'amidon n'est plus utilisable lorsqu'elle ne peut plus être pompée.

Il n'existe ainsi pas, à la connaissance de la Demanderesse, de moyens permettant de disposer de compositions aqueuses d'amidons anioniques, prêtes à l'emploi sans opération de cuisson, suffisamment concentrées et stables au sens de l'invention, c'est-à-dire présentant une stabilité suffisante, dans le temps, de la viscosité et du degré de substitution.

Les solutions proposées à ce jour ne sont pas satisfaisantes et ce, quel que soit le DS.

Il est ainsi du mérite de la Demanderesse d'avoir trouvé un moyen pour fournir des compositions concentrées d'amidon(s) anionique(s) stables, prêtes à l'emploi, ayant une viscosité suffisamment faible pour pouvoir être pompée.

Les travaux de la Demanderesse ont en effet permis de déterminer que le problème technique pouvait être résolu grâce à une association particulière d'amidons anioniques solubles et d'amidons, non ioniques ou anioniques, insolubles à température ambiante.

La présente invention a par conséquent pour objet une composition aqueuse contenant :

- au moins un amidon anionique gélatinisé soluble, présentant une densité de charges comprise entre -150 μeq/g sec et -6000 μeq/g sec, de préférence comprise entre -200 μeq/g sec et -6000 μeq/g sec, et
- au moins un amidon insoluble anionique ou non ionique,

ladite composition présentant une teneur totale en matières sèches amylacées supérieure à 10%, de préférence comprise entre 15 % et 70%.

La teneur totale en matières sèches amylacées des compositions est comprise de préférence entre 21 et 65%, en particulier entre 25 et 55 %.

La présente invention a également pour objet une composition aqueuse contenant au moins un amidon anionique gélatinisé soluble succinylé, présentant une densité de charges, de préférence apportée par les groupes succinyle, comprise entre -150 μeq/g sec et -6000 μeq/g sec, de préférence comprise entre -200 μeq/g sec et -6000 μeq/g sec, ladite composition présentant une teneur totale en matières sèches amylacées supérieure à 10%, de préférence comprise entre 15 % et 70%.

De telles teneurs importantes en matières sèches sont obtenues grâce à la réduction de la masse moléculaire des amidons anioniques solubles, en particulier, par hydrolyse enzymatique, notamment par des alpha-amylases.

L'amidon insoluble, anionique ou non ionique, est généralement soit un amidon non gélatinisé soit un amidon partiellement gonflé. Il s'agit de préférence d'un amidon anionique insoluble.

Une élaboration basée sur ces règles permet de dépasser très aisément 10% ou même 15% de matières sèches. Les teneurs en matières sèches sont couramment de 21%, 25% ou plus, ce qui permet des conditions de commercialisation satisfaisantes. Elles peuvent atteindre dans certains cas, des valeurs allant jusque 65 %, voire 70%, notamment grâce à la technique de solubilisation telle que décrite dans la demande de brevet français FR 2 898 897.

L'amidon soluble dans l'eau, à température ambiante, des compositions de la présente invention peut être obtenu par solubilisation thermique et/ou chimique, et/ou par l'obtention d'un degré de substitution suffisant.

La Demanderesse a constaté qu'il était possible d'obtenir les compositions aqueuses amylacées, stables et pompables, de la présente invention avec des quantités relativement faibles d'amidon anionique insoluble. En effet, on a obtenu des compositions présentant une stabilité suffisante dès lors que la partie d'amidon anionique insoluble, non gélatinisé ou partiellement gonflé, représentait au moins 1% du poids total (sec/sec) de la somme de l'amidon anionique gélatinisé soluble et de l'amidon insoluble, non gélatinisé ou partiellement gonflé, anionique ou non ionique.

Il est parfois avantageux d'utiliser une proportion plus élevée d'amidon insoluble, en particulier au moins égale à 10% et au plus égal à 60 % du poids total d'amidon (sec/sec). Une proportion au moins égale à 25% et au plus égale à 55 % du poids total d'amidon (sec/sec), permet souvent de respecter au mieux les impératifs fixés.

Les amidons solubles et insolubles utilisés dans les compositions aqueuses de la présente invention peuvent être issus d'amidons de céréales, notamment de blé et de maïs, y compris ceux issus de variétés riches en amylose ou en amylopectine, d'amidons de tubercules comme la pomme de terre et le manioc, ou d'amidons de légumineuses comme le pois ou le lupin.

Il est bien entendu possible d'utiliser des mélanges d'amidons de différentes origines.

Dans un mode de réalisation préféré des compositions de la présente invention, l'amidon anionique soluble et l'amidon insoluble, lorsqu'il s'agit également d'un amidon anionique, portent les mêmes substituants anioniques. Ces substituants sont de préférence des groupes succinyle fixés par estérification des groupes hydroxyle par l'anhydride succinique.

Les amidons anioniques solubles utilisés dans la présente invention ont de préférence une densité de charges négatives comprise entre -250 et -5500 μeq/g sec, en particulier comprise entre -400 et -5000 μeq/g sec, et plus préférentiellement encore comprise entre -450 et -4500 μeq/g sec.

On estime généralement que la viscosité initiale (avant stockage) des compositions aqueuses de la présente invention est satisfaisante du point de vue de leur utilisation envisagée, en particulier pour la fabrication de papier et de carton, lorsque la viscosité Brookfield, mesurée à 25°C et à 20 tours/minute, est comprise entre 200 et 10 000 mPa.s, de préférence entre 250 et 8 000 mPa.s, et en particulier entre 350 et 7 000 mPa.s.

La Demanderesse a également mis au point un nouveau procédé, très avantageux, de préparation de la fraction soluble de la matière amylacée des compositions de la présente invention.

Au cours des essais menés, la Demanderesse a en effet constaté qu'il était très facile d'obtenir des amidons ayant une densité de charge souhaitée par un procédé de digestion enzymatique d'amidons anioniques par des alpha-amylases, lorsqu'on terminait le procédé de l'état de la technique par une étape supplémentaire de refroidissement actif de la solution d'amidon anionique issue de l'étape de désactivation de l'enzyme. Autrement dit, la Demanderesse a constaté qu'il était possible d'obtenir des densités de charges plus importantes en refroidissant la composition aqueuse d'amidon anionique soluble, chaude, sortant de l'étape de désactivation thermique de l'enzyme, par exemple au moyen d'un échangeur de chaleur de manière à ramener la température très rapidement, en quelques minutes seulement, à une température proche de la température ambiante.

La présente invention a par conséquent pour objet un procédé de préparation d'une composition selon l'invention caractérisé par le fait qu'il comprend :

- une étape de traitement enzymatique d'un amidon anionique par une alpha-amylase,
- une étape de désactivation de l'alpha-amylase par chauffage de la composition obtenue à l'étape précédente à une température au moins égale à 130 °C, et
- une étape de refroidissement actif de la composition obtenue à l'étape précédente, jusqu'à une température inférieure à 50 °C, de préférence inférieure à 35 °C, en moins de 10 minutes, de préférence en moins de 5 minutes.

Les étapes de digestion, de désactivation et de refroidissement ci-dessus aboutissent à la fraction anionique soluble de la matière amylacée des compositions de la présente invention.

L'étape de désactivation thermique est mise en oeuvre de préférence dans un appareil de type « Jet-Cooker ».

Comme le montre en effet la comparaison des Exemples 1 et 2 ci-après, le refroidissement lent de la composition issue de l'étape de désactivation thermique de l'enzyme, par exemple par simple dissipation de la chaleur en plusieurs dizaines de minutes, aboutit de manière totalement surprenant à un amidon ayant un taux de substitution et une densité de charge considérablement plus réduits qu'un procédé équivalent comportant une étape finale de refroidissement rapide.

La présente invention a en outre pour objet un procédé de préparation d'une composition aqueuse amylacée comprenant,

- une étape d'anionisation d'un amidon, de préférence par carboxyalkylation, en particulier par carboxyméthylation, ou par estérification, en particulier par succinylation,
- une étape de gélatinisation d'un amidon anionique, et
- une étape de diminution de la masse moléculaire dudit amidon gélatinisé, de préférence par digestion enzymatique, notamment par une alpha-amylase,

les différentes étapes étant mises en oeuvre successivement ou simultanément, de préférence simultanément, le procédé étant caractérisé par le fait qu'il est mis en oeuvre sur un tambour sécheur.

La présente invention a en outre pour objet un procédé de préparation d'une composition aqueuse amylacée comprenant,

- une première étape d'anionisation d'un amidon, de préférence par carboxyalkylation, en particulier par carboxyméthylation, ou par estérification, en particulier par succinylation, et
- une deuxième étape d'anionisation de l'amidon issu de la première étape, de préférence par carboxyalkylation, en particulier par carboxyméthylation, ou par estérification, en particulier par succinylation, cette deuxième étape étant mise en oeuvre en phase colle.

Les procédés de la présente invention sont avantageusement des procédés continus.

Pour les étapes de gélatinisation, la température du réacteur est de préférence à peine plus élevée que la température de gélatinisation de l'amidon. La température dans le réacteur est ainsi choisie en fonction de la nature de l'amidon traité, pour assurer sa solubilisation dans les meilleures conditions.

Le cuiseur sous pression, de préférence monté en ligne, en aval du réacteur, aura pour rôle de parfaire l'état de cuisson et la fixation du réactif, d'apporter, par effet thermique, une meilleure stabilité et d'inhiber l'enzyme. Il est recommandé de l'alimenter en vapeur à une pression suffisante.

Le dispositif tel que décrit dans la demande de brevet français FR 2 898 897, constitue une solution tout à fait appropriée aux transformations envisagées dans le cadre de la présente invention. Il permet l'utilisation d'une faible quantité d'amidon anionique insoluble.

Dans le procédé utilisant des tambours sécheurs pour assurer, à la fois, la solubilisation, l'anionisation et la réduction de la masse moléculaire, il est nécessaire d'alimenter le dispositif en vapeur surchauffée à une pression suffisante, c'est-à-dire au moins égale à 5 bars, de préférence, supérieure à 7 bars, pour assurer la solubilisation de la matière amylacée et obtenir, à la sortie, une feuille déshydratée homogène.

La Demanderesse a mis au point une autre variante avantageuse du procédé permettant l'obtention de degrés de substitution élevés. Cette variante comprend en plus des étapes décrites ci-dessus, une étape réactionnelle supplémentaire, en phase colle, définie comme une « sur-anionisation ».

Le procédé ainsi amélioré pour l'obtention de compositions anioniques aqueuses selon l'invention, est caractérisé en ce qu'il comprend au moins deux phases d'anionisation, c'est-à-dire deux étapes de fixation d'un ou plusieurs réactifs anioniques sur la partie gélatinisée soluble, la seconde au moins ayant obligatoirement lieu en phase colle.

Ce procédé ne permet pas seulement d'obtenir des degrés de substitution élevés, mais offre en outre une grande souplesse et des rendements réactionnels globaux très attractifs.

La Demanderesse n'a pas rencontré d'obstacle à augmente le nombre de modifications en phase colle, ouvrant ainsi l'accès aux densités de charge les plus élevées.

La Demanderesse considère ainsi qu'il est tout à fait possible de résoudre le problème technique lié à la préparation d'une composition anionique, aqueuse, stable et performante, selon les propositions décrites ci-dessus.

Les compositions aqueuses de la présente invention sont particulièrement intéressantes en tant qu'adjuvants dits « de masse », ajoutés dans la suspension fibreuse lors de la fabrication de papier, tels que les agents de rétention, d'égouttage et/ou ceux destinés à l'amélioration des caractéristiques physiques des papiers.

L'utilisation à une composition selon l'invention est bénéfique, notamment grâce à la possibilité d'utiliser un amidon insoluble anionique ou non ionique, à haute masse moléculaire et d'atteindre les meilleures caractéristiques physiques.

La composition selon l'invention, en tant qu'adjuvant de masse, peut être introduite dans la suspension de fibres en tout point du circuit, dès la trituration en « pulper » jusqu'à la caisse de tête, en n'excluant aucun appareil susceptible de s'y prêter, notamment le château de pâte et les cuviers.

L'utilisation des compositions selon l'invention est également intéressante en partie humide de la machine à papier, par toute technique adaptée telle que, par exemple, la pulvérisation.

En outre, il a été observé que la composition selon l'invention peut intervenir dans la préparation de compositions d'agents de collage, notamment pour l'obtention d'émulsions destinées au collage du papier en milieu neutre, et/ou la préparation de compositions contenant au moins un agent choisi parmi les azurants optiques, les colorants et les polymères synthétiques.

Si la réduction de la masse moléculaire des amidons anioniques peut être obtenue par tout moyen connu de l'homme de l'art, notamment par une hydrolyse acide et une oxydation, le plus souvent ménagée, ou par grillage à sec (dextrines), on peut également envisager des moyens thermiques, connus de l'homme de l'art sous le nom de « Hot Moisture Treatment (HMT) » ou d' « Annealing », des moyens thermochimiques, mécaniques ou encore chimiques.

Peuvent être associées d'autres modifications par exemple par des substituants non-ioniques comme l'oxyde de propylène, ou par des réactifs cationiques, conduisant à des amidons amphotères. Dans ce dernier cas, il va de soi que l'amidon doit rester globalement anionique.

Les amidons insolubles, non gélatinisés ou partiellement gonflés, anioniques ou non ioniques, sont aussi sujets à modifications complémentaires avant, pendant ou après la modification anionique. Ils peuvent être soumis à des opérations chimiques telles que l'oxydation, l'hydrolyse acide ou l'éthérification, thermiques, thermomécaniques ou thermochimiques, le grillage à sec notamment.

Il peut être en outre envisagé de faire appel, pour la partie insoluble, à des amidons, anioniques ou non ioniques, issus de toute opération de réticulation connue de l'homme de l'art.

Les compositions de la présente invention peuvent contenir en outre d'autres additifs par exemple :

- des agents épaississants et/ou suspensifs tels que les gommes xanthane, comme l'usage en est décrit dans la demande de brevet internationale WO 84/04315, les alginates, l'agar-agar, les gommes gellane, karaya, arabique, de caroube, de guar, adragante, les carraghénanes ou les galactomannanes,
- des celluloses en poudre ou micronisées, modifiées ou non, comme les hémicelluloses et les éthers de cellulose, tels les carboxyméthylcelluloses, les hydroxyéthylcelluloses, les hydroxypropylcelluloses et dérivés,
- des charges diverses, sous forme de poudre, de nano-particules, de nano-fibres, comme des argiles, des silicates, alumino-silicates ou autres dérivés métalliques notamment.

Des effets intéressants, notamment en termes de stabilité, peuvent être obtenus par la présence d'agents alcalins dans les compositions de la présente invention.

Les aspects essentiels de la présente invention, relatifs à l'élaboration de compositions selon l'invention, et à leur utilité pour la fabrication du papier, vont être décrits de façon plus détaillée à l'aide des exemples qui suivent, qui ne sont aucunement limitatifs.

Il doit être en outre retenu que les compositions selon l'invention peuvent être dignes d'intérêt pour la préparation de compositions de collage du papier ou de compositions contenant au moins un agent d'ennoblissement du papier, notamment choisi parmi les azurants optiques, les colorants et les polymères synthétiques.

Elles sont en outre susceptibles d'être utilisées pour le traitement des eaux industrielles, papetières et non papetières, et des eaux et boissons, fermentées et non fermentées, destinées à la consommation de l'homme ou de l'animal.

De même, elles peuvent avantageusement intervenir dans la préparation de produits cosmétiques, de produits chimiques divers, par exemple, de produits d'entretien ménager et de nettoyage, de détergents, d'agents de traitement des métaux.

Elles sont en outre utiles à la confection de compositions adhésives, en particulier destinées au collage de matériaux cellulosiques comme, par exemple, celui de cartons ondulés, pour le traitement de cuirs et de produits textiles, notamment, tissés, tricotés ou de type dit « tissue », obtenus par voie humide, sèche ou fondue.

Elles sont aussi susceptibles de participer utilement à la fabrication de produits, composites ou non, utiles aux industries du bois, notamment des agglomérés et contreplaqués, du bâtiment, notamment des ciments, bétons, briques ou tuiles, du verre, notamment des fibres et dérivés, de la céramique, à l'extraction des minerais ou de diverses séparations de matières minérales, à l'extraction du pétrole ou à l'agglomération, par exemple, de houille, de charbon de bois ou de sables, notamment de fonderie.

Exemple 1 :

Cet exemple décrit la préparation d'une composition d'amidon anionique selon l'état de la technique

Une solution colloïdale d'une matière amylacée anionique gélatinisée (fécule de pomme de terre succinylée d'un degré de substitution (DS) de 0,07) obtenue par une méthode conventionnelle décrite dans la littérature, est mise en solution dans de l'eau à 9% de matières sèches (MS). La composition aqueuse obtenue présente une viscosité Brookfield de 8000 mPa.s, mesurée à 25°C et à 20 tours/minute. Ladite viscosité évolue très rapidement. Elle n'est plus mesurable après 48 heures de stockage.

Préparée sous la forme d'un lait à 17% MS, elle alimente un réacteur continu qui reçoit en outre 0,6%, en volume par rapport à la fécule commerciale, d'une alpha-amylase (FUNGAMYL 800L - NOVOZYMES). La température pour cette étape de gélatinisation est de 60°C, le temps moyen de séjour est de 20 minutes.

L'enzyme est inhibée par passage en Jet-Cooker à 130°C (désactivation thermique).

La solution aqueuse d'amidon obtenue a une MS de 11% et présente une viscosité de 1030 mPa.s. La matière amylacée transformée affiche une densité de charge, mesurée sur l'appareil « Streaming Current Detector », commercialisé par la société « MÜTEK », de -133 $\mu$eq/g sec (SCD) et un degré de substitution de 0,023.

Exemple 2 :

On répète le procédé ci-dessus à ceci près qu'après inhibition de l'enzyme par chauffage à une température de 130 °C, on fait passer la solution aqueuse obtenue dans un échangeur de chaleur afin de refroidir le plus rapidement possible la solution colloïdale à une température inférieure à 35°C.

La mise en oeuvre de cette étape de refroidissement actif et rapide supplémentaire permet, toutes conditions réactionnelles égales par ailleurs, d'aboutir à un rendement réactionnel bien supérieur. Le produit obtenu a en effet une densité de charge de -420 $\mu$eq/g sec, soit une charge ionique plus de trois (3) fois supérieure à celle de l'amidon anionique préparé à l'Exemple 1. Son DS est de 0,063 (x 2,7).

Le nouveau procédé comprenant une étape de refroidissement rapide est sensiblement plus performant.

Exemple 3 :

On illustre ici l'effet d'une seconde réaction d'anionisation mise en oeuvre avec réactif de substitution identique à celui d'une première étape, sur un amidon de base transformé dans un premier temps dans les conditions de l'art antérieur, en l'occurrence, sur le produit obtenu dans l'exemple 1.

On transfère la quantité nécessaire de solution colloïdale obtenue dans l'exemple 1 dans un réacteur équipé d'une boucle de régulation de pH. Nous ajustons le milieu redox à la neutralité, puis le pH à 8,5 à l'aide d'une solution de soude à 3,5 % de concentration et maintenons le milieu réactionnel sous régulation de pH.

Nous ajoutons 5% d'anhydride succinique, en sec par rapport à l'amidon sec, en une heure sous régulation de pH à 8,5. En fin d'addition, nous laissons 30 minutes de réaction avant de neutraliser à pH 6.

Le produit obtenu offre une densité de charge de - 495$\mu$eq/g sec et un DS de 0,08.

Exemple 4 :

On répète le procédé de l'Exemple 3 en modifiant la quantité d'anhydride succinique et le temps nécessaire à l'introduction, c'est-à-dire on ajoute 10 % en 2 heures. Le produit obtenu a une densité de charge de -907 ueq/g sec et un DS de 0,13.

Exemple 5

On procède à une étape d'anionisation supplémentaire d'un amidon anionique obtenu par un procédé tel que décrit à l'Exemple 2, par des quantités de plus en plus élevées d'anhydride succinique.

Ainsi, on fait réagir un amidon anionique présentant un DS de 0,05 et une densité de charge de -400 µeq/g sec, avec :

- 19% (sec/sec) en 3 heures 30 (exemple 5), ou
- 55% (sec/sec) en 10 heures (exemple 6), ou
- 150% (sec/sec) en 25 heures (exemple 7).

Les analyses conduisent aux résultats suivants (présentés ici en comparaison avec ceux obtenus dans les exemples 3 et 4) :

|  | Amidon de base 1 SCD=-135µeq/g DS = 0,023 | | Amidon de base 2 SCD= -400µeq/g DS = 0,05 | | |
|---|---|---|---|---|---|
| Anh. Succinique sec/sec | 5 (ex.3) | 10 (ex. 4) | 19 (ex. 5) | 55 (ex. 6) | 150 (ex. 7) |
| Densité de charges (SCD) | -495 | -907 | -1500 | -3500 | -4240 |
| DS | 0,08 | 0,13 | 0,29 | 0,74 | 1,80 |

Deux modifications successives permettent de parvenir à une gamme très large de DS et de densités de charge.
On note que le recours à la procédure de l'exemple 2, avec refroidissement rapide, permet une excellente fixation du réactif en phase colle, ce qui lui confère un avantage indéniable en termes d'environnement et d'écologie.

Exemple 6

Cet exemple illustre une réaction d'anionisation d'une matière amylacée sur tambour sécheur.
Dans la cuve d'alimentation du tambour sécheur, on prépare un lait de fécule de pomme de terre à 30% de matière sèche et on additionne 21% de monochloracétate de sodium sec, par rapport à la fécule de pomme de terre sèche.
On alimente le tambour sécheur, chauffé par de la vapeur d'eau à 10 bars, avec le mélange ainsi préparé en apportant en ligne, avant l'arrivée sur tambour, la quantité stoechiométrique de soude par rapport au monochloracétate de sodium. La réaction a lieu sur le tambour. Elle est assortie d'une déshydratation suffisante conduisant à une feuille qui est ensuite broyée. Le produit broyé est dispersé dans de l'eau à 10°TH, à 10% de matière sèche, sous agitation pendant 30 minutes.
La solution présente une viscosité de 6500 mPa.s, mesurée à 25°C et à 100tours/minute, sur viscosimètre Brookfield.
La densité de charges est de -1305 µeq/g sec, le DS de 0,24.

Exemple 7

La mise en oeuvre est, en tous points, identique à celle de l'exemple 6. Seule, la quantité de monochloracétate de sodium et de soude est doublée, le lait de fécule de pomme de terre en recevant ainsi 42% (sec/sec) de monochloroacétate de sodium. Le produit dispersé dans l'eau, dans les mêmes conditions que précédemment, présente une viscosité Brookfield de 5100 mPa.s.
La densité de charges est de -1769 µeq/g sec et le DS de 0,39.

Exemple 8 :

Cet exemple illustre la préparation d'une colle anionique dicarboxylique. On apporte, à un lait de fécule de pomme de terre à 35% MS, placé sous régulation de pH à 2 (acide chlorhydrique), 30% de per-iodate de sodium sous la forme d'une solution à pH 2 en 40 minutes. La réaction est ensuite maintenue pendant une heure.
On neutralise à pH8 par de la soude diluée. On filtre, on lave, avant de remettre le produit en suspension à 15%MS, 5°C et à pH 5,0. Sous régulation à ce pH avec de la soude diluée, on ajoute 10% d'eau oxygénée puis, en 2 heures, 27% de chlorite de sodium.

La réaction, menée pendant 18 heures, est arrêtée par neutralisation à pH 10 par la soude. Filtration et lavage. On remet en lait à 10%MS, on ajuste le pH à 6 et on chauffe jusqu'à obtention d'une colle homogène.

Le produit présente une densité de charges de -1980 μeq/g sec.

Exemple 9 :

Une fécule de pomme de terre est succinylée de façon à présenter un indice d'ester de 3,5%. Elle subit ensuite, dans un réacteur dont la température est fixée à 63°C, une transformation enzymatique (FUNGAMYL 800L, alpha-amylase) durant 20 minutes. La solution, à 14,95% de MS, a une viscosité Brookfield, mesurée à 25°C, d'environ 1550 mPa.s à 20 tours/minute et de 1200 mPa.s à 100 tours/minute. La densité de charge est de -249,7 μeq/g sec.

De cette solution fraîche, on soutire plusieurs échantillons de 500 grammes chacun (soit 74,75 grammes de produit sec), auxquels on ajoute, sous agitation à 450 tours/minute, différentes quantités d'un amidon de maïs maléosulfoné en poudre, dont la densité de charge est de -594,4 μeq/g sec. Insoluble à température ambiante, il contient environ 10% d'eau de constitution.

On répète l'essai 2 et en ajoutant respectivement 0, 05 (essai 2bis) et 0,1% (2ter) de gomme xanthane en poudre. On observe, après une semaine, puis un mois, une éventuelle décantation en l'exprimant par :

$$ID \ (indice) = 100 - (hauteur \ du \ dépôt/hauteur \ totale) \times 100$$

On mesure également la viscosité Brookfield. Les résultats sont présentés dans le tableau suivant :

| Solution de fécule succinylée | Amidon de mais maléosulfoné en poudre | Viscosite Brookfield 20trs/mn (mPa.s) | | | ID (%) Indice de Décantation | |
|---|---|---|---|---|---|---|
| | | T= 0 | 7jours | 30jours | | |
| 500grammes | 25grammes (1) | 3000 | 3800 | 3700 | 7 | 7 |
| 500grammes | 50grammes (2) | 4300 | 5200 | 3500 | 7 | 14 |
| 500grammes | 50grammes (2bis) | 4500 | 6500 | 6000 | 3 | 3 |
| 500grammes | 50grammes (2ter) | 4000 | 6000 | 5500 | 1 | 1 |
| 500grammes | 75grammes | 6600 | 4500 | 3500 | 13 | 14 |
| 500grammes | 100grammes | 10000 | 12500 | 8500 | 0 | 0 |

Pour les essais réalisés à 25, 50 et 75 grammes (soit, respectivement, environ 24%, 37,6% et 47,45% d'amidon anionique en poudre par rapport à l'amidon sec total), il y a décantation. Le problème est résolu pour 100 grammes (54,63% du total sec/sec). Ce résultat est obtenu au prix d'un accroissement sensible de la viscosité.

La gomme xanthane, pour 50 grammes d'amidon de mais anionique insoluble, améliore nettement la stabilité.

Exemple 10 :

D'autres tests menés avec des compositions similaires contenant 75 grammes d'amidon de mais maléosulfoné pour 500 grammes de solution anionique, permettent d'appréhender l'influence de la température de stockage (5 et 35°C) sur la viscosité Brookfield mesurée à 20 trs/mn, durant 3 semaines:

| | Viscosite Brookfield 20trs/mn (mPa.s) | | | | |
|---|---|---|---|---|---|
| | initiale | 24 heures | 1 semaine | 2 semaines | 3 semaines |
| Essai 3-5°C | 1400 | 2400 | 2500 | 2500 | 2400 |
| Essai 3-35°C | | 800 | 750 | 750 | 650 |

L'essai 2, à 50 grammes d'amidon de mais maléosulfoné, montre qu'il est souhaitable d'ajouter un agent suspensif tel que la gomme xanthane. Un dosage à 75 grammes de poudre pour 500 grammes de solution à 14% de MS apporte une stabilité remarquable, à basse ou à haute température de stockage.

Exemple 11 :

Deux compositions selon l'invention sont estimées face à des mises en oeuvre d'amidons anioniques correspondant à l'art antérieur, en étant associées à un amidon cationique et/ou un polychlorure d'aluminium (PAC).

Plus précisément, l'essai PVP1 (blanc) ne comporte que du PAC alors que l'essai PVP2 contient de l'amidon cationique (HI-CAT 5163AM) et du PAC.

Les essais PVP3 et PVP4 sont conformes au brevet européen EP 0 282 415, en prévoyant l'addition séparée, mais simultanée (technique dite « DUALE »), en solution, d'amidon cationique (1% sec.), et d'amidon anionique (0,2% sec.).

On utilise le même polychlorure d'aluminium (0,2% sec.). L'essai PVP3 concerne un amidon de maïs anionique succinylé, l'essai PVP4, un amidon maléosulfoné.

L'utilisation de PAC et de la technique dite « DUALE », séparément ou en combinaison, est représentative de l'art antérieur. On y ajoute un essai ne différant des essais PVP3 et PVP4 que par le fait que l'amidon anionique maléosulfoné de l'essai PVP4, est introduit dans la pâte à l'état insoluble (essai PVP4 bis).

Les compositions selon l'invention (essais PVP5 et PVP6) correspondent aux préparations 2bis et 2ter de l'exemple 9. Leurs matières sèches sont respectivement de 20,5 et 20,1%. Leur densité de charge est comparable et voisine de -275 $\mu$eq/g sec.

Les comparaisons sont faites sur un circuit papetier pilote reproduisant la marche sur machine. Des prélèvements réguliers donnent accès à des données majeures telles que la rétention totale et la DCO mesurée sur les eaux sous toile.

Le tirage de formettes de papier (200g/m$^2$, pour une appréciation optimale des caractéristiques physiques) permet des mesures classiques, telles que la cohésion interne (Scott-Bond), mesure physique représentative, et les cendres (à 450°C).

La pâte est issue de vieux papiers recyclés à 100%. Peu réceptive aux polymères cationiques, elle présente une conductivité de 4000$\mu$S/cm environ et un pH voisin de 7.

On ajoute, selon des séquences définies, et dans cet ordre : 1% d'amidon cationique (HI-CAT 5163AM), puis 0,2% d'amidon anionique sec, et 0,2% sec de polychlorure d'aluminium (PAC 18), par rapport à la pâte sèche.

| essai | | DCO (mg/l) | Rétention totale (%) | Scott-Bond (J/m$^2$) | Cendres (%) |
|---|---|---|---|---|---|
| PVP1 | Blanc (PAC) | 842 | 90,9 | 423 | 5,54 |
| PVP2 | Cationiques + PAC | 782 | 92,8 | 436 | 6,63 |
| PVP3 | +succinylé | 834 | 91,8 | 454 | 6,47 |
| PVP4 | +Maléosulfoné (sol.) | 768 | 92,5 | 444 | 6,69 |
| PVP4bis | Maléosulfoné (ins.) | 870 | 90,8 | 448 | 6,21 |
| **PVP5** | **500/50/0,05%** | **772** | **92,8** | **495** | **6,60** |
| **PVP6** | **500/50/0,1%** | **642** | **93,7** | **480** | **6,80** |

L'interprétation la plus attrayante consiste à comparer les meilleurs résultats présentés par l'art antérieur, soit ceux de l'essai PVP4, à ceux obtenus avec les compositions de l'invention (PVP5 et PVP6) :

- Les résultats des essais PVP4 et PVP5 sont du même niveau en termes de DCO, de rétention et de cendres. Par contre, parallèlement, la composition selon l'invention apporte un bénéfice de plus de 10% en termes de cohésion interne, ce qui est important. On peut attribuer ce gain, au moins partiellement, à la possibilité offerte par l'invention d'ajouter des amidons anioniques insolubles de hautes masses moléculaires.

- Au-delà, l'essai PVP6 apporte, comparé à l'essai PVP4, des gains appréciables en termes de DCO (-16,4%), de rétention (+1,2 point), de cohésion interne (+8,1%), pour un taux de cendres légèrement augmenté (+3%).

L'homme de l'art sait que, le plus généralement, des caractéristiques telles que rétention et cendres évoluent en sens contraire de la cohésion interne. Il ne manquera pas de souligner l'intérêt des résultats présentés, ainsi que celui d'une baisse de la Demande Chimique en Oxygène (DCO).

Exemple 12 :

La composition selon l'invention utile à l'essai PVP6 de l'exemple 11, est comparée à une autre composition selon l'invention, élaborée à partir de la solution colloïdale 2 de l'exemple 9, sur laquelle on pratique une seconde réaction dite de « sur-anionisation », conforme à la procédure décrite dans l'exemple 3.

Cette composition, objet de l'essai PVP7, diffère de la première en ce qu'elle utilise 75 grammes de poudre, et non pas 50 grammes, en recevant aussi 0,1% de gomme xanthane. Elle se trouve à 29,1%MS et présente une densité de charge de -539,2μeq/g sec.

On ajoute à une pâte de vieux papiers similaire à celle de l'exemple 11, selon des séquences définies, et dans cet ordre, 0,4% de composition anionique selon l'invention, comptée sèche, 0,8% d'amidon cationique (HI-CAT 5163AM), et 0,2% sec de polychlorure d'aluminium (PAC 18), comptés par rapport à la pâte sèche.

Les manipulations sont identiques à celles décrites dans l'exemple 11, notamment en ce qui concerne le grammage, recherché, de 200g/m$^2$.

| | | DCO (mg/l) | Rétention totale (%) | Scott-Bond (J/m$^2$) | Cendres (%) |
|---|---|---|---|---|---|
| PVP6 | 500/50/1% | 724 | 93,5 | 479 | 6,73 |
| PVP7 | 500/75/1% | 670 | 94,7 | 518 | 6,83 |

Pour un taux de cendres légèrement supérieur (+ 1,5%), la composition comprenant un « amidon sur-anionisé », grâce à deux phases distinctes de modification anionique (PVP7) offre, pour une DCO réduite de 7,5%, une rétention (+1,2point) et une cohésion interne (+8%) sensiblement améliorées, quand on le compare à un amidon anionique résultant d'une seule transformation (PVP6).

Il est permis de conclure, comme pour l'exemple 11, en soulignant le gain réalisé sur l'ensemble des critères retenus.

On peut raisonnablement supposer et s'attendre à ce que les effets positifs observés dans les exemples 11 et 12, soient cumulables.

Enfin, il convient de souligner que l'extrait sec atteint ici, très proche de 30 % sans qu'il soit nécessaire d'exploiter toutes les possibilités offertes par l'invention, présente un intérêt commercial indéniable.

**Revendications**

1. Composition aqueuse contenant :

   - au moins un amidon anionique gélatinisé soluble, présentant une densité de charges comprise entre -150 μeq/g sec et -6000 μeq/g sec, de préférence comprise entre -200 et -6000 μeq/g sec, et
   - au moins un amidon insoluble anionique ou non ionique,

   ladite composition présentant une teneur totale en matières sèches amylacées supérieure à 10%, de préférence comprise entre 15 % et 70%.

2. Composition selon la revendication 1, **caractérisée en ce qu'**elle présente une teneur totale en matières sèches amylacées comprise entre 21 et 65%, de préférence entre 25 et 55 %.

3. Composition selon l'une quelconque des revendications précédentes, **caractérisée par le fait que** l'amidon insoluble est un amidon anionique.

4. Composition selon l'une quelconque des revendications précédentes, **caractérisée en ce que** l'amidon insoluble anionique ou non ionique, représente au moins 1% en poids, de préférence de 10 % à 60 % en poids et en particulier de 25 % à 55 % en poids (sec/sec), de ladite teneur totale en matière sèche amylacée.

5. Composition selon l'une quelconque des revendications précédentes, **caractérisée en ce que** l'amidon anionique gélatinisé soluble présente une densité de charges négatives comprise entre -250 et -5500 μeq/g sec, de préférence comprise entre -400 et -5000 μeq/g sec, plus préférentiellement encore comprise entre -450 et -4500 μeq/g sec.

6. Composition selon l'une quelconque des revendications précédentes, **caractérisée en ce qu'**elle présente une viscosité Brookfield., mesurée à 25°C et 20 tours/minute, comprise entre 200 et 10 000 mPa.s, de préférence comprise entre 250 et 8 000 mPa.s, de préférence encore, comprise entre 350 et 7 000 mPa.s.

7. Composition selon l'une quelconque des revendications précédentes, **caractérisée en ce que** l'amidon gélatinisé soluble est choisi parmi les amidons succinylés.

8. Composition selon l'une quelconque des revendications précédentes, **caractérisée en ce que** l'amidon insoluble est un amidon insoluble anionique choisi parmi les amidons succinylés.

9. Procédé de préparation d'une composition selon l'une quelconque des revendications précédentes, **caractérisé par le fait qu'**il comprend :

   - une étape de traitement enzymatique d'un amidon anionique par une alpha-amylase,
   - une étape de désactivation de l'alpha-amylase par chauffage de la composition obtenue à l'étape précédente à une température au moins égale à 130 °C, et
   - une étape de refroidissement actif de la composition obtenue à l'étape précédente, jusqu'à une température inférieure à 50 °C, de préférence inférieure à 35 °C, en moins de 10 minutes, de préférence en moins de 5 minutes.

10. Procédé de fabrication du papier ou du carton plat mettant en oeuvre une composition selon l'une quelconque des revendications 1 à 8.

11. Utilisation d'une composition selon l'une quelconque des revendications 1 à 8, en tant qu'additif pour la fabrication de papier à partir d'une suspension de fibres.

12. Utilisation selon la revendication 10, **caractérisée en ce que** ladite composition est introduite dans la suspension de fibres et est utilisée en tant qu'agent de rétention, agent d'égouttage et/ou en tant qu'agent d'amélioration des caractéristiques physiques du papier.

13. Utilisation selon l'une des revendications 10 ou 11, **caractérisée en ce que** ladite composition est introduite en partie humide de la machine à papier, de préférence par pulvérisation.

14. Utilisation d'une composition selon l'une quelconque des revendications 1 à 8 pour la préparation de compositions de collage du papier, pour la préparation de compositions contenant au moins un agent d'ennoblissement du papier, l'agent d'ennoblissement étant choisi de préférence parmi les azurants optiques, les colorants et les polymères synthétiques.

15. Utilisation d'une composition selon l'une quelconque des revendications 1 à 8 pour le traitement des eaux industrielles, papetières et non papetières.

16. Utilisation d'une composition selon l'une quelconque des revendications 1 à 8, dans des eaux et boissons, fermentées et non fermentées, destinées à la consommation de l'homme ou de l'animal.

**Claims**

1. An aqueous composition containing:

   - at least one soluble gelatinized anionic starch having a charge density between -150 $\mu$eq/g dry and -6000 $\mu$eq/g dry, preferably between -200 and -6000 $\mu$eq/g dry, and
   - at least one anionic or nonionic insoluble starch,

   said composition having a total content of starchy dry matter greater than 10%, preferably between 15% and 70%.

2. The composition as claimed in claim 1, wherein the total content of starchy dry matter is between 21% and 65%, preferably between 25% and 55%.

3. The composition as claimed in any one of the preceding claims, wherein the insoluble starch is an anionic starch.

4. The composition as claimed in any one of the preceding claims, wherein the anionic or nonionic insoluble starch represents at least 1% by weight, preferably from 10% to 60% by weight and in particular from 25% to 55% by weight (on a dry/dry basis), of said total content of starchy dry matter.

5. The composition as claimed in any one of the preceding claims, wherein the soluble gelatinized anionic starch has a negative charge density between -250 and -5500 $\mu$eq/g dry, preferably between -400 and -5000 $\mu$eq/g dry, more preferably still between -450 and -4500 $\mu$eq/g dry.

6. The composition as claimed in any one of the preceding claims, wherein the Brookfield viscosity, measured at 25°C and 20 rpm, is between 200 and 10 000 mPa.s, preferably between 250 and 8000 mPa.s, more preferably between 350 and 7000 mPa.s.

7. The composition as claimed in any one of the preceding claims, wherein the soluble gelatinized starch is chosen from succinylated starches.

8. The composition as claimed in any one of the preceding claims, wherein the insoluble starch is an anionic insoluble starch chosen among succinylated starches.

9. A process for preparing a composition as claimed in any one of the preceding claims, wherein it comprises:

   - a step of enzymatic treatment of an anionic starch with an $\alpha$-amylase,
   - a step of deactivation of the $\alpha$-amylase by heating the composition obtained in the preceding step at a temperature at least equal to 130°C; and
   - a step of active cooling of the composition obtained in the preceding step, to a temperature below 50°C, preferably below 35°C, in less than 10 minutes, preferably in less than 5 minutes.

10. A process for manufacturing paper or flat board using a composition as claimed in any one of claims 1 to 8.

11. Use of a composition as claimed in any one of claims 1 to 8, as an additive for manufacturing paper from a suspension of fibers.

12. The use as claimed in claim 10, wherein said composition is introduced into the suspension of fibers and is used as a retention agent, drainage agent and/or as an agent for improving the physical characteristics of the paper.

13. The use as claimed in either of claims 10 and 11, wherein said composition is introduced into the wet part of the paper-making machine, preferably by spraying.

14. Use of a composition as claimed in any one of claims 1 to 8, for preparing paper sizing compositions, for preparing compositions that contain at least one paper-finishing agent, the finishing agent being preferably chosen from optical brighteners, dyes and synthetic polymers.

15. Use of a composition as claimed in any one of claims 1 to 8 for the treatment of papermaking and non-papermaking industrial waste waters.

16. Use of a composition as claimed in any one of claims 1 to 8, in fermented and unfermented beverages and waters, intended for human or animal consumption.

**Patentansprüche**

1. Wasserhaltige Zusammensetzung, umfassend:

   - mindestens eine lösliche anionische gelatinierte Stärke, die eine Ladungsdichte aufweist, umfassend zwischen -150 $\mu$eq/g Trockenmasse und -6000 $\mu$eq/g Trockenmasse, vorzugsweise umfassend zwischen -200 Trockenmasse und -6000 $\mu$eq/g Trockenmasse, und
   - mindestens eine unlösliche anionische oder nichtionische Stärke, wobei die Zusammensetzung einen Gesamtgehalt amylierter Trockenmasse über 10 % aufweist, vorzugsweise umfassend zwischen 15 % und 70 %.

**2.** Zusammensetzung nach Anspruch 1, **dadurch gekennzeichnet, dass** sie einen Gesamtgehalt amylierter Trockenmasse zwischen 21 und 65 %, vorzugsweise umfassend zwischen 25 % und 55 %, aufweist.

**3.** Zusammensetzung nach einem der vorhergehenden Ansprüche, **dadurch gekennzeichnet, dass** die unlösliche Stärke eine anionische Stärke ist.

**4.** Zusammensetzung nach einem der vorhergehenden Ansprüche, **dadurch gekennzeichnet, dass** die unlösliche anionische oder nichtionische Stärke mindestens 1 Gew.-%, vorzugsweise von 10 Gew.-% bis 60 Gew.-% und insbesondere 25 Gew.-% bis 55 Gew.-% (Trockenmasse/Trockenmasse) des Gesamtgehalts amylierter Trockenmasse darstellt.

**5.** Zusammensetzung nach einem der vorhergehenden Ansprüche, **dadurch gekennzeichnet, dass** die lösliche anionische gelatinierte Stärke eine negative Ladungsdichte zwischen -250 und -5500 μeq/g Trockenmasse aufweist, vorzugsweise umfassend zwischen -400 und -5000 μeq/g Trockenmasse, mehr bevorzugt umfassend zwischen -450 μeq/g und -4500 μeq/g Trockenmasse.

**6.** Zusammensetzung nach einem der vorhergehenden Ansprüche, **dadurch gekennzeichnet, dass** sie gemessen bei 25 °C und 20 Umdrehungen/Minute eine Brookfield-Viskosität aufweist, umfassend zwischen 200 und 10000 mPa·s, vorzugsweise zwischen 250 und 8000 mPa·s, noch bevorzugter zwischen 350 und 7000 mPa·s.

**7.** Zusammensetzung nach einem der vorhergehenden Ansprüche, **dadurch gekennzeichnet, dass** die lösliche gelatinierte Stärke ausgewählt ist aus den succinylierten Stärken.

**8.** Zusammensetzung nach einem der vorhergehenden Ansprüche, **dadurch gekennzeichnet, dass** die unlösliche Stärke eine unlösliche anionische Stärke ist, ausgewählt aus den succinylierten Stärken.

**9.** Verfahren zur Herstellung einer Zusammensetzung nach einem der vorhergehenden Ansprüche, **dadurch gekennzeichnet, dass** es umfasst:

- einen Schritt der enzymatischen Behandlung einer anionischen Stärke Mit einer alpha-Amylase,
- einen Schritt der Deaktivierung der alpha-Amylase durch Erhitzen der im vorhergehenden Schritt erhaltenen Zusammensetzung auf eine Temperatur von mindestens gleich 130 °C und
- einen aktiven Abkühlschritt der im vorhergehenden Schritt erhaltenen Zusammensetzung auf eine Temperatur unter 50 °C, vorzugsweise unter 35 °C, in weniger als 10 Minuten, vorzugsweise in weniger als 5 Minuten.

**10.** Verfahren zur Herstellung von Papier oder Karton unter Verwendung einer Zusammensetzung nach einem der Ansprüche 1 bis 8.

**11.** Verwendung einer Zusammensetzung nach einem der Ansprüche 1 bis 8 als Additiv zur Herstellung von Papier aus einer Fasersuspension.

**12.** Verwendung nach Anspruch 10, **dadurch gekennzeichnet, dass** die Zusammensetzung in die Fasersuspension eingebracht wird und als ein Retentionsmittel, Entwässerungsmittel und/oder als ein Mittel zur Verbesserung der physikalischen Charakteristika von Papier verwendet wird.

**13.** Verwendung nach einem der Ansprüche 10 oder 11, **dadurch gekennzeichnet, dass** die Zusammensetzung im Nassbereich der Papiermaschine , vorzugsweise durch Pulverisieren, eingebracht wird.

**14.** Verwendung einer Zusammensetzung nach einem der Ansprüche 1 bis 8 zur Herstellung von Papierklebezusammensetzungen, zur Herstellung von Zusammensetzungen, die mindestens ein Papierveredlungsmittel enthalten, wobei das Papierveredlungsmittel vorzugsweise ausgewählt wird aus optischen Aufhellern, den Färbemitteln und synthetischen Polymeren.

**15.** Verwendung einer Zusammensetzung nach einem der Ansprüche 1 bis 8 zur Behandlung industrieller Abwässer, aus der Papierherstellung oder nicht aus der Papierherstellung.

**16.** Verwendung einer Zusammensetzung nach einem der Ansprüche 1 bis 8 in Wässern und Getränken, fermentiert und nichtfermentiert, die vorgesehen sind für einen Konsum durch Mensch oder Tier.

## RÉFÉRENCES CITÉES DANS LA DESCRIPTION

**Documents brevets cités dans la description**

- US 4387221 A
- EP 1167434 A
- WO 0194699 A
- FR 2898897
- WO 8404315 A
- EP 0282415 A

**Littérature non-brevet citée dans la description**

- Industrial Aspects. **Whistler et al.** Starch : Chemistry and Technology. Academic Press, 1967
- **J.A. Radley.** Starch Production Technology. Applied Science Publishers Ltd, 1976
- **Whistler et al.** Starch : Chemistry and Technology. Academic Press, 1984